Europäisches Patentamt

European Patent Office

Office européen des brevets

(11) Publication number: **0 145 809**
**B1**

# EUROPEAN PATENT SPECIFICATION

(45) Date of publication of patent specification: **19.11.87**

(51) Int. Cl.⁴: **B 64 D 29/00, F 01 D 25/12**

(21) Application number: **83112786.5**

(22) Date of filing: **19.12.83**

(54) Apparatus and method for minimizing engine backbone bending.

(43) Date of publication of application:
**26.06.85 Bulletin 85/26**

(45) Publication of the grant of the patent:
**19.11.87 Bulletin 87/47**

(84) Designated Contracting States:
**DE FR GB IT NL**

(56) References cited:
**GB-A-2 046 193**
**GB-A-2 072 752**
**US-A-3 013 641**
**US-A-3 981 449**

(73) Proprietor: **The Boeing Company**
**P.O. Box 3707**
**Seattle Washington 98124 (US)**

(72) Inventor: **Porter, Kenneth W.**
**440 92nd Ave. S.E.**
**Mercer Island, WA 98040 (US)**
Inventor: **McLaren, Douglas**
**1923 7th Ave. W.**
**Seattle, WA 98119 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to an aircraft as described in the introductory part of claim 1.

Such an aircraft is known from GB—A—2 072 752. With this known aircraft the engine is connected with its casing to the engine mounting frame. The cowl is attached at both ends thereof to the engine case in such a way relative to the mounting means, that the cowl is capable of resisting case deflection in response to moments generated by thrust loads. In this way the engine backbone bending problem is reduced.

The bending problem creates engine performance deterioration that causes the engine to burn extra fuel. The engine performance deterioration results because the beam formed by the engine casing does not have sufficient stiffness to prevent distortion of the engine casing during take-off or in flight maneuvers. The distortion of the casing can cause rotor instability, and rapid wear of the tips of the compressor, turbine, and fan blades may result from casing deflections causing blade tip interference with the casing. Most of the wear on the engine is experienced on the first flight of a new or refurbished engine, and most of the first flight deterioration occurs at the moment of lift-off and aircraft rotation to the climb attitude. Repair only partially restores performance since the interference condition may persist.

The effect of the accumulated damage is the need for more shop visits for refurbishment, resulting in greatly increased cost of maintenance, and in overall loss of fuel efficiency. Such a loss of fuel efficiency, in these days of steadily increasing costs, is an unacceptable burden. Therefore, it has been a design object to prevent this loss of fuel efficiency by having the casing and cowl being adapted to integrally taking up bending loads, so that deflections will be reduced and blade tip rubbing will be prevented.

This load sharing concept has proved effective in dealing with the engine backbone bending problem. However, there is a certain amount of trade off involved. That is, structurally integrating a conventionally made core cowl with the engine casing adds to the overall weight of the aircraft. There is a net gain in fuel efficiency since the losses due to engine performance deterioration are greatly reduced, but the improvement in fuel efficiency is far from maximized.

Therefore, it is a principal object of the present invention to provide an aircraft of the kind set forth above having a light weight core cowl that shares bending loads with the engine casing.

This is achieved with an aircraft according to the invention with the measures of the characterizing part of claim 1. Such an aircraft equipped with such load carrying core cowls made of light weight composite materials may actually weigh less than a conventionally manufactured airplane.

The use of composite materials in engine nacelles presents problems because these materials, although not subject to destruction from very high temperatures, lose some of their ability to carry loads as their temperature rises. Hence, according to the invention it is ensured that in service the temperature of each load-bearing portion of cowl will not exceed the temperature at which the decrease in load-carrying ability becomes significant.

This invention relates to an improvement to be used in combination with an aircraft in which an engine is carried by an engine mounting frame and the engine casing acts as a beam. According to a basic aspect of the invention, the improvement comprises a core cowl that surrounds a portion of the engine. This cowl comprises a material that can withstand heat but that loses strength as its temperature rises above a predetermined level. The cowl includes a sidewall and stiffening means for stiffening the cowl. The outer surface of the sidewall is positioned to be exposed to a cooling airstream. The stiffening means includes a plurality of tubular beams on the inner surface of the sidewall of the cowl. Each of the beams has a wall portion that is spaced from the inner surface of the sidewall. The improvement also includes connecting means for connecting the cowl to the engine mounting frame and for structurally integrating the engine casing with the cowl. Means for directing cooling air through the beams is also provided. The cowl acts as a beam and shares bending loads with the engine casing.

According to another aspect of the invention, the tubular beams include first and second sets of non-intersecting beams, each such set being spaced about the inner surface of the sidewall of the cowl. The first set intersects the second set, and the two sets are interconnected to allow the passage of cooling air between them.

According to still another aspect of the invention, the tubular beams extend axially along and are distributed circumferentially about the inner surface of the cowl sidewall.

According to a preferred aspect of the invention, the axial beams are spaced circumferentially about the inner surface of the sidewall of the cowl. The stiffening means further includes a plurality of axially-spaced tubular beams extending circumferentially around the inner surface of the sidewall. Each of these circumferential beams has a wall portion that is spaced from the inner surface of the sidewall. The axial beams and the circumferential beams are interconnected to allow the passage of cooling air between them.

According to another aspect of the invention, said wall portion of each tubular beam is essentially parallel to the inner surface of the sidewall of the cowl.

According to a preferred aspect of the invention, the tubular beams are hollow box beams.

According to another preferred aspect of the invention the means for directing cooling air comprises inlet means at the forward end of the cowl and outlet means at the rear end of the cowl. The inlet means and the outlet means are positioned to maintain flow of cooling air by forced aspiration.

According to still another preferred aspect of the invention, the cowl comprises laminated panels of composite material. The tubular beams are formed integrally with the sidewall of the cowl.

According to a method aspect of the invention, a method of minimizing engine backbone bending is provided in a system in which an engine is carried by an engine mounting frame of an aircraft, a core cowl surrounds a portion of the engine, the outer surface of the sidewall of the cowl is exposed to a cooling airstream, and the engine casing acts as a beam that carries bending loads. The method comprises providing the core cowl with tubular beams on the inner surface of the sidewall of the cowl to stiffen the cowl. The cowl and engine casing are connected together and structurally integrated. This allows the cowl to act as a beam so that the cowl and the engine casing each experience bending loads. A metered flow of cooling air is directed through the tubular beams to maintain the radially inner portions of the beams at essentially the same temperature as the outer surface of the sidewall of the cowl. Preferably, the step of directing a metered flow of cooling air comprises selecting tubular beams with longitudinal passageways that are sized to permit the desired amount of flow, and positioning inlet means at the forward end of the cowl and outlet means at the rear end of the cowl to maintain flow of cooling air by forced aspiration.

The apparatus and method of this invention to a large degree eliminate engine backbone bending and its attendant problems. The bending loads are divided between the load carrying core cowl and the engine casing. By providing core cowls that are structurally reinforced and air cooled, the invention makes it possible for the bending loads to be shared without adding to the weight of the aircraft; that is, the overall weight of the aircraft equipped with non-load-carrying cowls. The load carrying core cowl may be constructed from various lightweight composite or metal materials that maintain their structural strength within the range of temperatures that can be maintained in an air cooled cowl. The structure of the apparatus of the present invention solves the problem of the tendency for the inner portions of reinforcing beams of the cowl to reach higher temperatures than the outer surface of the cowl. In the apparatus of the present invention, the reinforcing beams have a dual function, structural reinforcement and providing means for cooling. The beams also protect portions of the sidewall of the cowl from radiated engine heat.

It is anticipated that the application of the method and apparatus of the present invention will result in great savings in both maintenance costs and fuel costs associated with the operation of aircraft. The method and apparatus of the present invention have the additional advantage of being compatible with the use of the new composite materials. Therefore, as these composites are used more and more in the construction of different parts of the airplane, including the wings, the load carrying core cowl and method of the present invention will be entirely compatible with the new structures.

These and other advantages and features will become apparent from the detailed description of the best mode for carrying out the invention that follows.

In the drawings, like element designations refer to like parts throughout, and:

Fig. 1 is a sectional view of a portion of an airplane wing on which is mounted a jet engine and the preferred embodiment of the load carrying core cowl of the present invention, with some elements shown in plan.

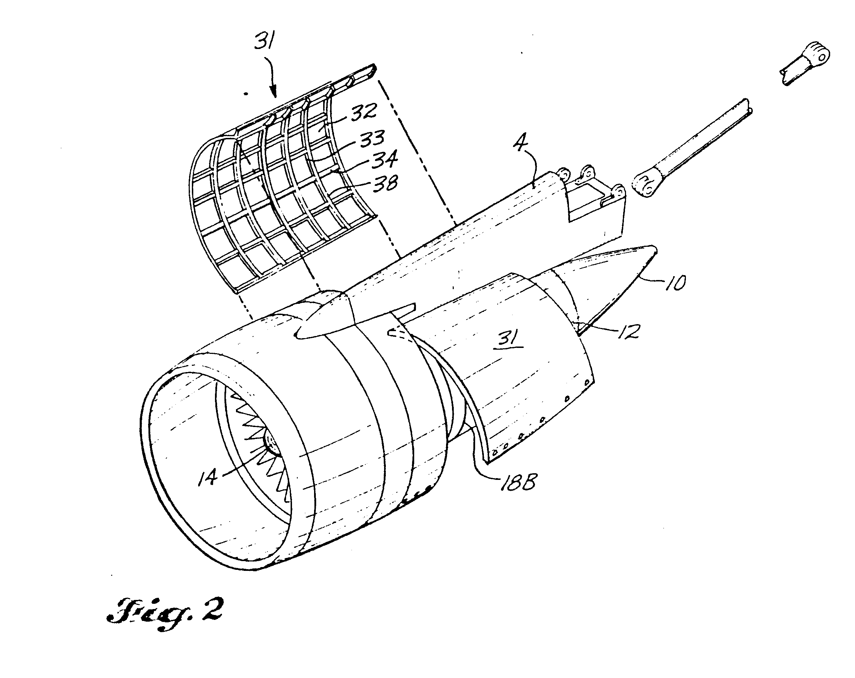

Fig. 2 is a partially exploded pictorial view of the frame structure, engine, and cowl shown in Fig. 1.

Fig. 3 is an exploded pictorial view of the preferred embodiments of the cowl and cowl support structure.

Fig. 4 is a side elevational view of the preferred embodiment of the cowl and the cowl support shroud with foreground portions cut away to reveal portions of the engine casing and the internal structure of the core cowl.

Fig. 5 is a fragmentary pictorial view of the inner surface of the preferred embodiment of the cowl.

Fig. 6 shows the cross-sectional configuration of a commonly used wide flange support beam.

Fig. 7 is a cross-sectional view of one of the tubular beams that form a part of the preferred embodiment of the invention.

Fig. 8 is a pictorial view looking toward the inner surface of one-half, or one door, of the load carrying core cowl of the preferred embodiment.

Fig. 9 is a detail of the indicated portion of the cowl door shown in Fig. 8, illustrating a portion of the hinge mechanism.

Fig. 10 is a detail of another portion of Fig. 8, as indicated in the drawing.

Fig. 11 is a detail of the end of one of the axial beams and a portion of the forward V-tongue support structure of the preferred embodiment.

Fig. 12 is a fragmentary pictorial view showing portions of the aft support ring frame, the load transfer ring, and one of the swivel links that structurally integrate the cowl with the engine casing.

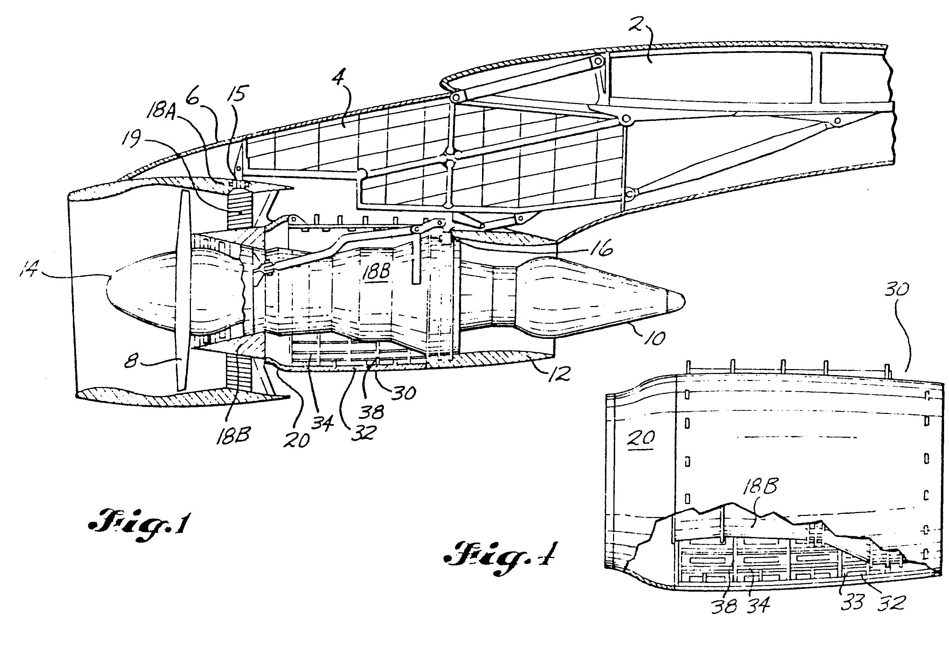

The drawings show a load carrying core cowl 30 and connecting and mounting structures that are constructed according to the invention and that also constitute the best mode of the apparatus of the invention currently known to the applicants. Fig. 1 shows the core cowl 30 and its associated structures in a typical installation in association with a jet engine mounted on an aircraft wing 2. A number of conventional features are illustrated in Fig. 1. These features include the wing 2 of the aircraft, the frame member 4 extending from the wing 2 and on which the engine is mounted, the forward strut fairing 6, the fan 8, the exhaust plug 10, the nozzle exhaust sleeve 12, and the nose cap 14. Such features are all standard in jet engines and may be varied considerably without affecting the functioning of the structures that are a part of the apparatus of the present invention.

The load carrying core cowl 30 of the present invention is an essentially cylindrical structure that surrounds the core of the engine in the conventional manner. The outer surface of the sidewall 32 of the cowl 30 is positioned, also in a conventional manner, to be exposed to a cooling airstream. This airstream is normally provided by the flow of ambient air. The cowl 30 is made of a material that can withstand heat but that loses structural strength as its temperature rises above a predetermined level. The cowl 30 includes an essentially cylindrical sidewall 32 and stiffening means for stiffening the cowl 30. The stiffening means increases the structural strength of the cowl 30.

The stiffening means includes a plurality of hollow tubular beams 34 on the inner surface of the sidewall 32 of the cowl 30. These beams preferably extend axially along the inner surface of the sidewall 32 of the cowl 30 and are distributed circumferentially about this inner surface. In the preferred embodiment, these axial beams 34 are spaced circumferentially about the inner surface of the sidewall 32, and the stiffening means also includes a plurality of axially spaced circumferential beams 38 that extend circumferentially around the inner surface of the sidewall 32 of the cowl 30. Of course, the beams could also be arranged, without departing from the spirit and scope of the invention, in any of a variety of different patterns that provide the required stiffening. By way of nonlimitative example only, they could be arranged in a helical pattern.

Each of the circumferential and the axial reinforcing beams 34, 38 are tubular and have a wall portion 36 that is spaced from the inner surface of the sidewall 32 of the cowl 30. Preferably, the wall portion 36 of each of the beams 34, 38 is also essentially parallel to the inner surface of the sidewall 32. In the preferred embodiment shown in the drawings, each of the axial and circumferential beams 34, 38 is a hollow box beam. Each such box beam is rectangular in cross section with two side webs 35 extending radially inwardly from the sidewall 32 and a radially inward wall portion 36 that connects the radially inner ends of the two side webs 35. This radially inward wall 36 forms the wall portion that is essentially parallel to and spaced from the inner surface of the sidewall 32 of the cowl 30.

The sidewall 32 of the cowl 30, the two side webs 35, and the radially inward wall 36 that connects the webs 35 together define an essentially rectangular passageway 37, 39 through each of the beams 34, 38. The axial beams 34 and the circumferential beams 38 are interconnected when they cross each other in a manner in which the rectangular passageways 37, 39 through the beams are interconnected. This allows the passage of cooling air between the axial and the circumferential beams 34, 38.

Although the beams 34, 38 and the passageways 37, 39 in the preferred embodiment shown in the drawings are rectangular in cross section, beams and/or passageways with differently shaped cross sections could also be provided. By way of nonlimitive example only, the passageway cross sections might be circular, elliptical, or triangular.

The greatest part of the structural stiffening of the load carrying core cowl 30 is accomplished by the provision of the above described axial and circumferential beams 34, 38. In addition to these beams 34, 38, the panel portions of the sidewall 32 of the cowl 30 between the beams 34, 38 are given further reinforcement by the provision of doublers 33 or "annular" rectangular areas of double thickness.

The cowl 30 is preferably made of a lightweight composite material. Most currently known composite materials are not suitable for use in constructing the cowl 30 because they lose their structural strength when their temperatures rise to relatively low levels. However, certain newly available composite materials maintain their structural strength at higher temperatures. One such material is Graphite/PRM-15 Polyimide, developed by the National Aeronautics and Space Administration. This composite maintains its structural strength at temperatures in the range of 260°C (=500°F) to 287,77°C (=550°F) and has an estimated useful life of 10,000 hours at 260°C (=500°F). Other lightweight composite materials that similarly maintain their structural strength at such temperatures could also be used to construct the cowl 30. In the preferred embodiment, the cowl 30 is made of laminate panels of such a composite material, and the axial and the circumferential beams 34, 38 are formed integrally with the sidewall 32 of the cowl 30. This construction has the advantages of maximizing both structural strength and lightness and of being relatively inexpensive to manufacture.

In operation, the flow of ambient air along the outer surface of the sidewall 32 of the cowl 30 is sufficient to maintain the temperature of the sidewall 32 at or below the 260°C (=550°F) range. However, there is a tendency for portion of the axial and circumferential beams 34, 38 to heat to a temperature higher than the 260°C (=550°F) range. This tendency is due to the greater proximity of the beams 34, 38 to the high engine temperatures and to the relative remoteness of the beams 34, 38 from the flow of ambient air that moves along the outer surface of the sidewall 32 of the cowl 30. Composite materials such as those used to construct the cowl 30 do not have sufficient thermal conductivity to allow the cooling of the outer surface of the sidewall 32 to provide sufficient cooling for the inner portions of the beam 34, 38. Therefore, it is necessary to provide means for cooling the two side webs 35 and, especially, the radially inward wall 36 of each beam 34, 38. This cooling is necessary because, although the composites used in making the cowl 30 maintain their structural strength in the 260°C (=500°F) range, these composites begin to lose their structural strength at temperatures above this level.

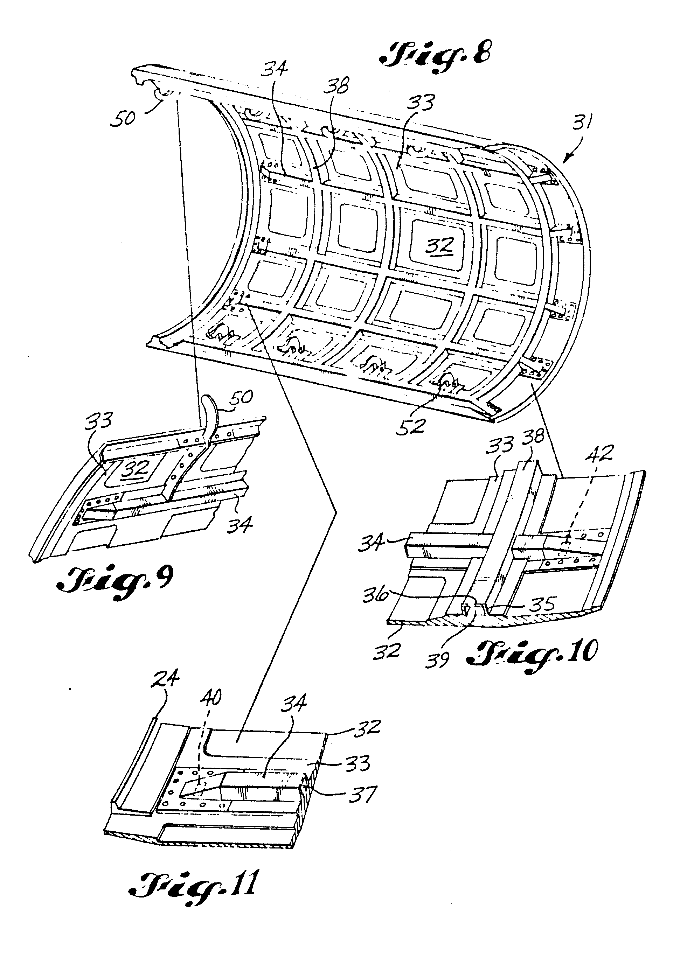

The need for cooling is one of the reasons that the reinforcing beams, the axial and circumferential beams 34, 38, are provided in tubular form. The tubular form of the beams 34, 38 makes it possible to direct cooling air through the beams 34, 38 and through the interconnecting passageways 37, 39 formed by the beams 34, 38. Fig. 7 shows a cross section of one of the beams 34, 38. Fig. 6 shows a cross section of a well known wide flange beam configuration 99 that is used for structural reinforcement of surfaces. A composite beam with such a configuration could not be properly cooled and, therefore, would fail when its inner portion was subjected to high engine temperatures.

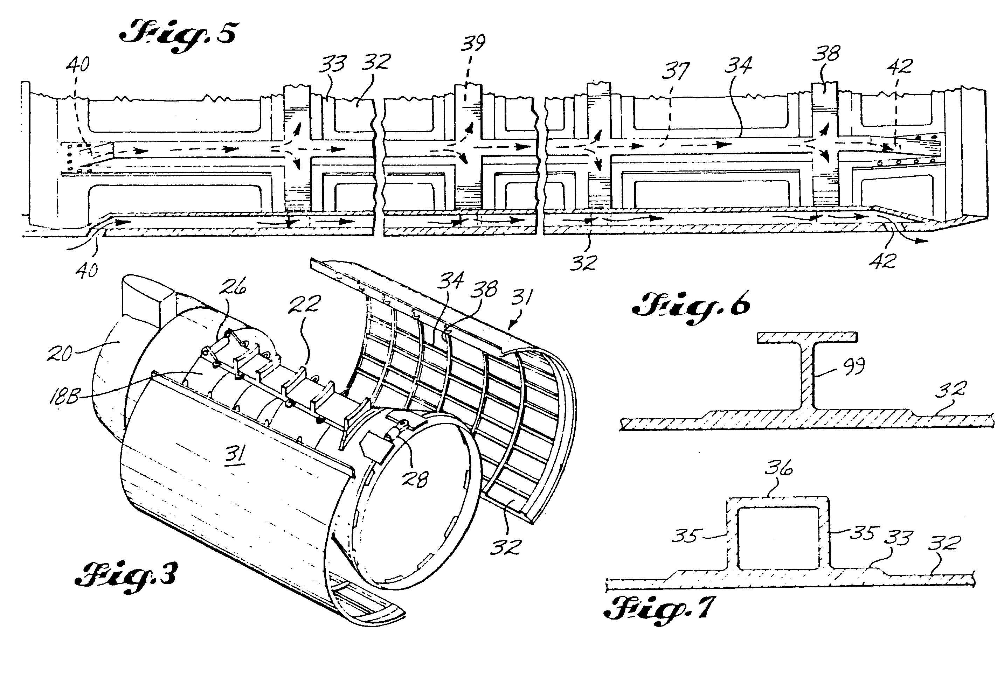

The flow path of cooling air through the beams 34, 38 is illustrated in Fig. 5. The flow is metered in order to maintain the inner portions 35, 36 of the beams 34, 38 at essentially the same temperature as the outer surface of the sidewall 32 of the cowl 30. When this is accomplished, each beam 34, 38 formed by two side webs 35, a radial inward wall 36, and a portion of the sidewall 32 of the cowl 30 properly functions as a structural beam to reinforce the strength of the cowl 30. With the radially inward wall 36 and the portion of the sidewall 30 having essentially equal strength, each is able to carry the compression or tension forces created in it by the tendency of the cowl 30 to bend. With each of these parts carrying its share of the load, the neutral plane (the plane between the compressed member and the tensioned member at which both compression and tension are zero) is maintained in its desired position substantially halfway between the radially inward wall 36 and the sidewall 30, and the beam 34, 38 functions efficiently as a structural reinforcement. The provision of the correct amount of flow of cooling air by metering the flow is important to the functioning of the cowl 30 because it maintains the compressed portion and the tensioned portion of the beam 34, 38 at essentially the same temperature level so that the strength of each of these portions is substantially equal.

The flow of cooling air through the beams 34, 38 may be provided in several ways. In the preferred embodiment shown in the drawings, the flow is provided by using forced aspiration to channel ambient air through the passageways 37, 39 formed by the beams 34, 38. In order to obtain the forced aspiration, inlet means are provided at the forward end of the cowl 30, and outlet means are provided at the rear end of the cowl 30. In the preferred embodiment, a suitable inlet 40 is located at the forward end of each axial beam 34, and a suitable outlet 42 is located at the rear end of each axial beam 34. These inlets 40 and outlets 42 are positioned in a known manner to take advantage of the relative velocity between the air inlet 40 and the air stream flowing past the cowl 30 and to minimize drag. As shown in the drawings, the inlet 40 is formed flush with the outer surface of the cowl 30 and angled slightly forward. Similarly, the outlet 42 is formed flush with the outer surface of the cowl 30 and is angled slightly to the rear of the cowl 30. The flow of cooling air is aspirated through the passageways 37, 39.

Of course, the flow of cooling air could be provided in other ways. One such way is to induce the flow of air by producing a suction effect through the passageways 37, 39 in the beams 34, 38 by injecting a flow of gases past an outlet opening in the passageways. Flow of cooling air may also be provided by supplying bleed air from the compressor in the engine.

In the preferred embodiment, the metering of the flow of cooling air is automatically provided by the structure of the beams 34, 38 and the inlet and outlet openings 40, 42. The sizes of the beams 34, 38 and the passageways 37, 39 extending through them are carefully selected to permit the desired amount of flow through them. In addition, the sizes and positions of the inlets 40 and outlets 42 are selected to create forced aspiration of the proper magnitude to maintain the desired amount of flow of cooling air.

As is standard in many known jet aircraft, the jet engine shown in Fig. 1 is connected to the frame member 4 carried by the wing 2. The engine fan casing 18A is connected to the frame 4 at a forward location 15, and an aft portion of the engine core casing 18B is connected to the frame 4 at an aft location 16. The fan casing 18A is connected to a forward portion of the core casing 18B through a series of radial struts 19. In this arrangement with the engine core casing 18B supported near each of its ends, the engine core casing 18B acts as a beam and carries the bending loads caused by the thrust and by the air loads acting on the aircraft. In known aircraft, the engine casing carries all of the bending loads. With the development of larger aircraft with larger engines of lighter weight construction, the bending loads on the engine casing have increased to a magnitude sufficient to cause serious performance deterioration of the engine.

A possible solution to the engine bending problem would be to stiffen the engine to give it greater structural strength. However, such a solution would cost a great deal more than the alternative of structurally integrating the cowl with the engine and would add to the overall weight of the aircraft. Therefore, in aircraft incorporating the apparatus of the present invention, connecting means are provided for connecting the core cowl to the engine mounting frame and for structurally integrating the engine casing with the core cowl. With the core cowl and the engine structurally integrated, the core cowl, like the engine, acts as a beam which is subject to bending during engine operation. Thus, the core cowl shares bending loads with the engine. This division of bending loads between concentric beams allows the engine to carry its share of the loads without experiencing undesirable performance deterioration.

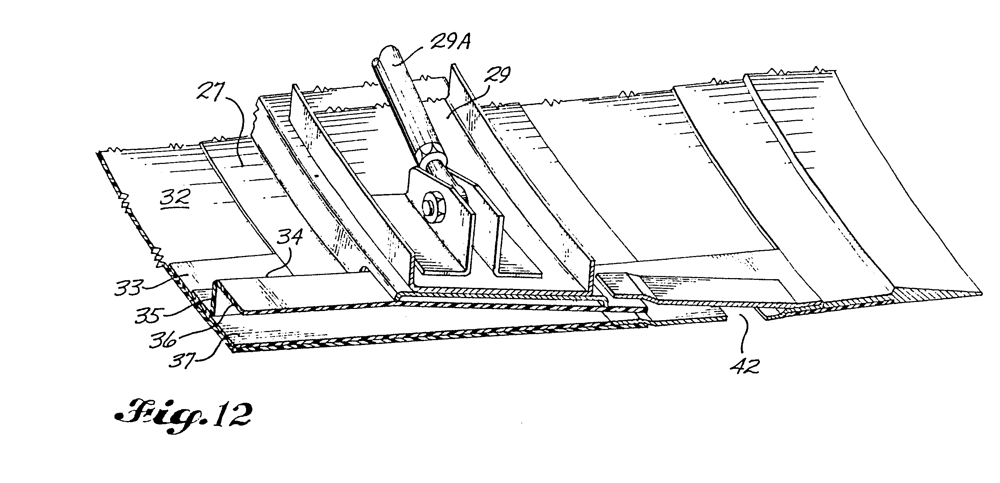

The preferred embodiment of the structural integration of the engine core casing 18B with the core cowl 30 has various aspects (See Figs. 3 and 12). One such aspect is that the forward attachments to the engine core casing 18B, via the cowl support shroud 20, have been increased over the conventional attachments to be load-bearing. A V-groove is provided on the aft end of the shroud 20, and a complementary V-tongue 24 is provided at the forward edges of the cowl doors 31 that form the essentially cylindrical cowl 30. A forward cowl door tensioner 26 on the ladder cowl support structure 22 of the engine core casing 18B provides hoop tension to make the connection load-bearing. An automatically operated hoop tensioning device is provided. This device is only in operation when the engine is running so that it will not interfere with maintenance accessibility. At the rear of the cowl doors 31, there is located a support ring frame 27. This support ring frame 27 receives a load transfer ring 29 which is carried by the engine core casing 18B and which transmits reactions evenly to the rear of the casing 18B. An aft cowl door tensioner 28 is provided on the ladder support structure 22 in association with this ring 29. The load transfer ring 29 preferably includes swivel links 29A (See Fig. 12) which allow for thermal expansion of the engine under all loading conditions. Hinges 50, such as the one shown in Fig. 9, are provided along the axial edges of the cowl doors 31 to allow pivoting of the doors 31 when they are opened. Latches 52 are provided to secure the two cowl doors 31 together, with each of the cowl doors 31 forming one-half of the essentially cylindrical cowl 30.

The load-bearing connections between the cowl 30 and the engine casing at the forward end of the cowl (through the intermediate shroud 20) and the aft end of the cowl 30 (through the load transfer ring 29) structurally integrate the cowl 30 with the engine casing. This results in the desired load sharing between the engine casing and the cowl 30. Each of the cowl 30 and the engine casing acts as a beam that carries a share of the bending loads.

Static load tests have been conducted to test the load sharing concept that is an aspect of the present invention. Simulated thrust loads and cowl bending moments were applied to apparatus constructed according to the invention. The results of the tests were overwhelmingly favorable. Sixty percent load sharing was achieved in the turbine section, and over forty percent load sharing in the fan section. The stiffening effect in the fan case will be extremely helpful in solving the problem of instability in the fan. The test results indicated that over 75% of the deterioration in the thrust-specific fuel consumption of the air due to backbone bending of the engine can be prevented by use of a load carrying core cowl. In addition, the engine casing offset can be reduced, producing a gain in the initial thrust-specific fuel consumption.

In summary, the apparatus and method of the present invention greatly reduce engine performance deterioration, and therefore greatly reduce maintenance costs and loss of fuel efficiency. With the use of the new composite materials, the benefits of the reduction in performance deterioration can be obtained with little or no weight penalty being incurred.

## Claims

1. Aircraft comprising at least one engine mounting frame (4) carrying an engine, said engine comprising a casing (18) and a core cowl (30) surrounding a portion of the engine and being connected to the casing and to said engine mounting frame, said casing and cowl being adapted to integrally taking up bending loads, and said cowl including a sidewall (32), the outer surface of which is positioned to be exposed to a cooling airstream, characterized by said cowl comprising a low weight composite material that can withstand engine operating heat but that loses strength as its temperature rises above a predetermined level, normally occurring under engine operating conditions, and stiffening means for stiffening the cowl, said stiffening means including a plurality of tubular beams (34, 38) on the inner surface of the sidewall (32) of the cowl, each of said beams having a wall portion (36) that is spaced from said inner surface; and by means (40, 42) for directing cooling air through said beams; wherein the cowl acts as a beam and shares bending loads with the engine casing.

2. The aircraft according to claim 1, characterized in that said tubular beams include a first set of non-intersecting beams (34) that are spaced about said inner surface, and a second set of non-intersecting beams (38) that are spaced about said inner surface, said first set of beams intersecting said second set, and said first and second sets of beams being interconnected to allow the passage of cooling air between them.

3. The aircraft according to claim 1 or claim 2, characterized in that said wall portion (36) is essentially parallel to said inner surface.

4. The aircraft according to claim 3, characterized in that said tubular beams are hollow box beams (34, 38).

5. The aircraft according to claim 1, characterized in that said tubular beams extend axially along and are distributed circumferentially about said inner surface.

6. The aircraft according to claim 5, characterized in that said axial beams (34) are spaced circumferentially about the inner surface of the sidewall (32) of the cowl; and the stiffening means further includes a plurality of axially-spaced tubular beams (38) extending circumferentially around the inner surface of said sidewall, each of said circumferential beams having a wall portion (36) that is spaced from said inner surface; said axial beams and said circumferential beams being interconnected to allow the passage of cooling air between them.

7. The aircraft according to claim 6, characterized in that said wall portion (36) of each axial beam (34) and said wall portion of each circum-

11

**0 145 809**

12

ferential beam (38) are essentially parallel to said inner surface.

8. The aircraft according to claim 7, characterized in that said axial beams and said circumferential beams are hollow box beams.

9. The aircraft according to claim 1, characterized in that the means for directing the cooling air comprises inlet means (40) at the forward end of the cowl, and outlet means (42) at the rear end of the cowl, said inlet means and said outlet means being positioned to maintain flow of cooling air by forced aspiration.

10. The aircraft according to claim 5 or claim 6, characterized in that the means for directing cooling air comprises inlet means (40) at the forward end of each axial beam, and outlet means (42) at the rear end of each axial beam, said inlet means and said outlet means being positioned to maintain flow of cooling air by forced aspiration.

11. The aircraft according to claim 1, characterized in that the cowl comprises laminate panels of composite material, and the tubular beams are formed integrally with the sidewall of the cowl.

12. In a system in which an engine is carried by an engine mounting frame (4) of an aircraft, a core cowl (30) surrounds a portion of said engine, the outer surface of the sidewall (32) of the cowl is exposed to a cooling airstream, and the engine casing acts as a beam that carries bending loads, a method of minimizing engine backbone bending, said method comprising: connecting the cowl (30) and the engine casing (18) together and structurally integrating the engine casing with the cowl to allow the cowl to act as a beam so that the cowl and the engine casing each experience bending loads; characterized by providing the core cowl with tubular beams (34, 38) on the inner surface of the sidewall (32) of the cowl (30) to stiffen the cowl; and directing a metered flow of cooling air through the tubular beams to maintain the radially inner portions of the beams at essentially the same temperature as the outer surface of the sidewall of the cowl.

13. A method according to claim 12, characterized in that the step of directing a metered flow comprises: selecting tubular beams with longitudinal passageways (37) that are sized to permit the desired amount of flow; and positioning inlet means (40) at the forward end of the cowl and outlet means (42) at the rear end of the cowl to maintain flow of cooling air by forced aspiration.

**Patentansprüche**

1. Flugzeug, umfassend wenigstens einen Triebwerksbefestigungsrahmen (4), der ein Triebwerk trägt, wobei das Triebwerk ein Gehäuse (18) und eine Kernverkleidung (30) umfaßt, welche einen Teil des Triebwerks umgibt und mit dem Gehäuse und dem Triebwerksbefestigungsrahmen verbunden ist, wobei das Gehäuse und die Verkleidung dazu geeignet sind, integral Biegebelastungen aufzunehmen und wobei die Verkleidung eine Seitenwand (32) aufweist, deren äußere Oberfläche so positioniert ist, daß sie einem kühlenden Luftstrom ausgesetzt ist, dadurch gekennzeichnet, daß die Verkleidung ein Niedriggewichts-Verbundmaterial umfaßt, das der Triebwerksbetriebshitze widerstehen kann, das jedoch Festigkeit verliert, wenn seine Temperatur über ein vorbestimmtes Niveau ansteigt, was normalerweise unter Triebwerksbetriebsbedingungen auftritt, und eine Versteifungseinrichtung zum Versteifen der Verkleidung, wobei die Versteifungseinrichtung eine Mehrzahl von rohrförmigen Trägern (34, 38) auf der inneren Oberfläche der Seitenwand (32) der Verkleidung aufweist, wobei jeder der Träger einen Wandteil (36) hat, der sich im Abstand von der inneren Oberfläche befindet; und daß eine Einrichtung (40, 42) zum Leiten von kühlender Luft durch die Träger vorgesehen ist; wobei die Verkleidung als ein Träger wirkt und Biegebelastungen mit dem Triebwerksgehäuse teilt.

2. Flugzeug nach Anspruch 1, dadurch gekennzeichnet, daß die rohrförmigen Träger einen ersten Satz von einander nicht schneidenden Trägern (34) aufweisen, die im Abstand um die erwähnte innere Oberfläche angeordnet sind, und einen zweiten Satz von einander nicht schneidenden Trägern (38), die im Abstand um die erwähnte innere Oberfläche angeordnet sind, wobei der erste Satz von Trägern den zweiten Satz schneidet und wobei der erste und zweite Satz von Trägern so miteinander verbunden sind, daß sie den Durchgang von kühlender Luft zwischen ihnen gestatten.

3. Flugzeug nach Anspruch 1 oder 2, dadurch gekennzeichnet, daß der Wandteil (36) im wesentlichen parallel zu der inneren Oberfläche ist.

4. Flugzeug nach Anspruch 3, dadurch gekennzeichnet, daß die rohrförmigen Träger hohle Kastenholme (34, 38) sind.

5. Flugzeug nach Anspruch 1, dadurch gekennzeichnet, daß sich die rohrförmigen Träger axial entlang der inneren Oberfläche erstrecken und umfangsmäßig um die innere Oberfläche verteilt sind.

6. Flugzeug nach Anspruch 5, dadurch gekennzeichnet, daß die axialen Träger (34) umfangsmäßig um die innere Oberfläche der Seitenwand (32) der Verkleidung im Abstand voneinander angeordnet sind; und daß die Versteifungseinrichtung weiter eine Mehrzahl von axial im Abstand voneinander angeordneten rohrförmigen Trägern (38) umfaßt, die sich umfangsmäßig um die innere Oberfläche der Seitenwand erstrecken, wobei jeder der Umfangsträger einen Wandteil (36) hat, der sich im Abstand von der inneren Oberfläche befindet; wobei die axialen Träger und die Umfangsträger miteinander so verbunden sind, daß sie den Durchgang von kühlender Luft zwischen ihnen gestatten.

7. Flugzeug nach Anspruch 6, dadurch gekennzeichnet, daß der Wandteil (36) von jedem axia-

7

13 0 145 809 14

len Träger (34) und der Wandteil von jedem Umfangsträger (38) im wesentlichen parallel zu der inneren Oberfläche sind.

8. Flugzeug nach Anspruch 7, dadurch gekennzeichnet, daß die axialen Träger und die Umfangträger hohle Kastenholme sind.

9. Flugzeug nach Anspruch 1, dadurch gekennzeichnet, daß die Einrichtung zum Leiten der Kühlluft eine Einlaßeinrichtung (40) an dem vorderen Ende der Verkleidung und eine Auslaßeinrichtung (42) an dem rückwärtigen Ende der Verkleidung umfaßt und daß die Einlaßeinrichtung und die Auslaßeinrichtung so positioniert sind, daß sie die Strömung von kühlender Luft durch zwangsweises Ansaugen aufrechterhalten.

10. Flugzeug nach Anspruch 5 oder 6, dadurch gekennzeichnet, daß die Einrichtung zum Leiten von Kühlluft eine Einlaßeinrichtung (40) an dem vorderen Ende jedes axialen Trägers und eine Auslaßeinrichtung (42) an dem rückwärtigen Ende jedes axialen Trägers umfaßt, wobei die Einlaßeinrichtung und die Auslaßeinrichtung so positioniert sind, daß sie die Strömung von kühlender Luft durch zwangsweises Ansaugen aufrechterhalten.

11. Flugzeug nach Anspruch 1, dadurch gekennzeichnet, daß die Verkleidung Laminatplatten aus Verbundmaterial umfaßt und daß die rohrförmigen Träger integral mit der Seitenwand der Verkleidung ausgebildet sind.

12. Verfahren zum Minimalisieren von einer Triebwegsachsenverbiegung in einem System, in dem ein Triebwerk von einem Triebwerksbefestigungsrahmen (4) eines Flugzeuges getragen wird, wobei eine Kernverkleidung (30) einen Teil des Triebwerks umgibt und wobei die äußere Oberfläche der Seitenwand (32) der Verkleidung einem kühlenden Luftstrom ausgesetzt ist und das Triebwerksgehäuse als ein Träger wirkt, der Biegebelastungen trägt, wobei das Verfahren folgendes umfaßt: Verbinden der Verkleidung (30) und des Triebwerksgehäuses (18) miteinander und strukturelles Integrieren des Triebwerksgehäuses mit der Verkleidung, um es der Verkleidung zu ermöglichen, als ein Träger zu wirken, so daß die Verkleidung und das Triebwerksgehäuse je Biegebelastungen erfahren, gekennzeichnet durch Versehen der Kernverkleidung mit rohrförmigen Trägern (34, 38) auf der inneren Oberfläche der Seitenwand (32) der Verkleidung (30), um die Verkleidung zu versteifen; und Leiten einer bemessenen Strömung von kühlender Luft durch die rohrförmigen Träger, so daß die radial inneren Teile der Träger auf im wesentlichen der gleichen Temperatur wie die äußere Oberfläche der Seitenwand der Verkleidung gehalten werden.

13. Verfahren nach Anspruch 12, dadurch gekennzeichnet, daß der Schritt des Leitens einer bemessenen Strömung folgendes umfaßt: Auswählen von rohrförmigen Trägern mit längsverlaufenden Kanälen (37), die so bemessen sind, daß sie die gewünschte Strömungsmenge ermöglichen; und Positionieren einer Einlaßeinrichtung (40) an dem vorderen Ende der Verkleidung und einer Auslaßeinrichtung (42) an dem rückwärtigen Ende der Verkleidung, so daß eine Strömung von kühlender Luft durch zwangsweises Ansaugen aufrechterhalten wird.

**Revendications**

1. Aéronef comprenant au moins un châssis (4) de montage de moteur portant un moteur, le moteur comprenant un carter (18) et un capot interne (30) entourant une partie du moteur et raccordé au carter et au châssis de montage de moteur, le carter et le capot étant destinés à encaisser solidairement les forces de flexion, et le capot comprenant une paroi latérale (32) dont la surface externe est disposée de manière qu'elle soit exposée à un courant d'air de refroidissement, caractérisé en ce que le capot est en un matériau composite léger qui peut supporter la chaleur due au fonctionnement du moteur mais dont la résistance mécanique diminue lorsque sa température dépasse un niveau prédéterminé apparaissant normalement dans les conditions de fonctionnement du moteur, et un dispositif de renforcement du capot, le dispositif de renforcement comprenant plusieurs poutres tubulaires (34, 38) placées à la surface interne de la paroi latérale (32) du capot, chacune des poutres ayant une partie (36) de paroi qui est distante de la surface interne, et en ce qu'un dispositif (40, 42) est destiné à diriger de l'air de refroidissement dans les poutres, si bien que le capot joue le rôle d'une poutre et partage les forces de flexion avec le carter du moteur.

2. Aéronef selon la revendication 1, caractérisé en ce que les poutres tubulaires comprennent un premier jeu de poutres (34) non sécantes qui sont espacées autour de la surface interne, et un second jeu de poutre (38) non sécantes qui sont espacées autour de la surface interne, le premier jeu de poutres recoupant le second jeu, le premier et le second jeu de poutres étant raccordés de manière que l'air de refroidissement puisse passer entre eux.

3. Aéronef selon l'une des revendications 1 et 2, caractérisé en ce que ladite partie de paroi (36) est essentiellement parallèle à la surface interne.

4. Aéronef selon la revendication 3, caractérisé en ce que les poutres tubulaires sont des poutres en forme de caisson creux (34, 38).

5. Aéronef selon la revendication 1, caractérisé en ce que les poutres tubulaires sont disposées axialement le long de la surface interne et sont réparties circonférentiellement autour de cette surface.

6. Aéronef selon la revendication 5, caractérisé en ce que les poutres axiales (34) sont espacées circonférentiellement autour de la surface interne de la paroi latérale (32) du capot, et le dispositif de renforcement comporte en outre plusieurs poutres tubulaires (38) espacées axialement, disposées circonférentiellement autour de la surface interne de la paroi latérale, chacune des poutres circonférentielles ayant une partie de paroi (36) qui est distante de la surface interne, les poutres axiales et les poutres circonférentielles étant raccordées afin qu'elles permettent le passage d'air de refroidissement entre elles.

7. Aéronef selon la revendication 6, caractérisé en ce que ladite partie de paroi (36) de chaque poutre axiale (34) et ladite partie de paroi de chaque poutre circonférentielle (38) sont sensiblement parallèles à la surface interne.

8. Aéronef selon la revendication 7, caractérisé ce que les poutres axiales et les poutres circonférentielles sont des poutres en forme de caisson creux.

9. Aéronef selon la revendication 1, caractérisé en ce que le dispositif destiné à diriger l'air de refroidissement comporte un dispositif d'entrée (40) placé à l'extrémité avant du capot, et un dispositif de sortie (42) placé à l'extrémité arrière du capot, les dispositifs d'entrée et de sortie étant disposés de manière qu'ils entretiennent la circulation d'air de refroidissement par aspiration forcée.

10. Aéronef selon l'une des revendications 5 et 6, caractérisé en ce que le dispositif destiné à diriger de l'air de refroidissement comporte une dispositif d'entrée (40) placé à l'extrémité avant de chaque poutre axiale, et un dispositif de sortie (42) placé à l'extrémité arrière de chaque poutre axiale, le dispositif d'entrée et le dispositif de sortie étant disposés de manière qu'ils entretiennent la circulation d'air de refroidissement par aspiration forcée.

11. Aéronef selon la revendication 1, caractérisé en ce que le panneau comprend des panneaux stratifiés d'un matériau composite, et les poutres tubulaires sont formées solidairement avec la paroi latérale du capot.

12. Dans un système dans lequel un moteur est supporté par un châssis (4) de montage d'un moteur d'un aéronef, un capot interne (30) entoure une partie du moteur, la surface externe de la paroi latérale (32) du capot est exposée à un courant d'air de refroidissement, et le carter du moteur joue le rôle d'une poutre qui supporte des forces de flexion, un procédé de réduction au minimum de la flexion de la structure centrale du moteur, ce procédé comprenant le raccordement du capot (30) et du carter (18) du moteur l'un à l'autre et l'intégration mécanique du carter du moteur et du capot afin que le capot puisse jouer le rôle d'une poutre et que le capot et le carter du moteur subissent tous deux des forces de flexion, caractérisé par la disposition sur le capot interne, de poutres tubulaires (34, 38) à la surface interne de la paroi latérale (32) du capot (30) afin que celui-ci ait une plus grande rigidité, et la direction d'un débit dosé d'air de refroidissement dans les poutres tubulaires afin que les parties radialement internes des poutres soient maintenues à la même température pratiquement que la surface externe de la paroi latérale du capot.

13. Procédé selon la revendication 12, caractérisé en ce que l'étape de direction d'un courant dosé comprend la sélection de poutres tubulaires ayant des passages longitudinaux (37) dont la dimension est telle qu'ils permettent le débit voulu, et le positionnement d'un dispositif d'entrée (40) à l'extrémité avant du capot et d'un dispositif de sortie (42) à l'extrémité arrière du capot afin qu'un courant d'air de refroidissement soit entretenu par aspiration forcée.

Fig.1

Fig.4

Fig. 2

31

32
33
34
38

4

10

12

31

14

18B

0 145 809

Fig.5

Fig.6

Fig.3

Fig.1

0 145 809

*Fig.8*

*Fig.9*

*Fig.10*

*Fig.11*

*Fig.12*